# EUROPEAN PATENT APPLICATION

(11) **EP 4 715 961 A1**
(43) Date of publication of application: **25.03.2026**
(21) Application number: 25204076.1
(22) Date of filing: 23.09.2025
(51) Int. Cl.: H01M 10/613, H01M 10/6556, H01M 10/6568, H01M 10/643, H01M 50/507

(54) **BATTERY MODULE AND BATTERY PACK**

(30) Priority: 24.09.2024 CN 202422339195 U; 12.12.2024 WO PCT/CN2024/138755
(71) Applicant: Eve Energy Co., Ltd., Huizhou, Guangdong 516006 (CN)
(72) Inventor: HUANG, Zhihua, HUIZHOU, 516006 (CN); ZHOU, Huiwen, HUIZHOU, 516006 (CN)
(74) Representative: Regimbeau

(57) **Abstract**

Provided are a battery module and a battery pack. The battery module includes a casing (1) having a liquid cooling chamber (11); two liquid cooling assemblies (2) disposed on two opposite sides of the liquid cooling chamber (11), respectively; a cell group (3) having multiple cells (31) disposed in the liquid cooling chamber (11); and a cells contact system, CCS, assembly (4) disposed between the cell group (3) and any one of the two liquid cooling assemblies (2). A liquid cooling assembly (2) has a cooling flow channel (21) communicating with the liquid cooling chamber (11).

## Description

### TECHNICAL FIELD

The present application relates to the field of battery technology and, in particular, to a battery module and a battery pack.

### BACKGROUND

With the rapid development of the times, increasingly high requirements are imposed on the charge rate of batteries. As the charge rate of batteries increases, the charge current increases, causing battery heating, a key problem that people have to pay attention to. At present, dual-sided liquid cooling is generally used to increase the cooling area of cells to improve the cooling efficiency.

As the number of cell strings increases, an increase in the length of a serpentine tube for dual-sided liquid cooling is required, resulting in an increasingly high cost of a battery pack which is not conducive to market competition. Moreover, the dual-sided liquid cooling can only achieve the contact with sides of cells, and thus the bottom and sides of the cells cannot be uniformly cooled. Meanwhile, during fast charging, in addition to the heat generated when the cells are charged and discharged, an aluminum busbar in a cells contact system (CCS) generates a certain amount of heat, affecting the cells and resulting in a significant temperature difference inside a battery module. Therefore, the current dual-sided liquid cooling cannot ensure the temperature uniformity of the battery module, making it difficult for the battery module to maintain stable operation.

### SUMMARY

In a first aspect, the present application provides a battery module. The battery module includes a casing having a liquid cooling chamber; two liquid cooling assemblies disposed on two opposite sides of the liquid cooling chamber, respectively; a cell group having multiple cells disposed in the liquid cooling chamber; and a CCS assembly disposed between the cell group and any one of the two liquid cooling assemblies. A liquid cooling assembly has a cooling flow channel communicating with the liquid cooling chamber.

In a second aspect, the present application provides a battery pack. The battery pack includes the preceding battery module.

The liquid cooling chamber communicates with the cooling flow channel so that a coolant can flow between the liquid cooling chamber and the cooling flow channel, and the coolant can take away heat from the cells and the CCS assembly in the flowing process, ensuring a relatively good cooling effect on the peripheries and ends of the cells and the CCS assembly, uniformly and thoroughly cooling the cell group and the CCS assembly, ensuring the temperature uniformity of the battery module, and thus ensuring the stable operation of the battery module.

### BRIEF DESCRIPTION OF THE DRAWINGS

FIG. 1 is a view illustrating the structure of a battery module according to an embodiment of the present application.
FIG. 2 is a cross-sectional view of FIG. 1 along a direction of A-A.
FIG. 3 is an enlarged view of region B of FIG. 2.
FIG. 4 is an exploded view illustrating the structure of a battery module according to an embodiment of the present application.
FIG. 5 is an enlarged view of region C of FIG. 4.

### Reference list

- 1: casing
- 11: liquid cooling chamber
- 12: opening
- 13: sealing groove
- 14: sealing member
- 2: liquid cooling assembly
- 21: cooling flow channel
- 22: liquid cooling plate
- 23: flow guide through hole
- 24: coolant inlet
- 25: coolant outlet
- 3: cell group
- 31: cell
- 32: flow guide gap
- 4: CCS assembly
- 41: flow guide tube
- 42: plastic support
- 43: aluminum busbar

### DETAILED DESCRIPTION

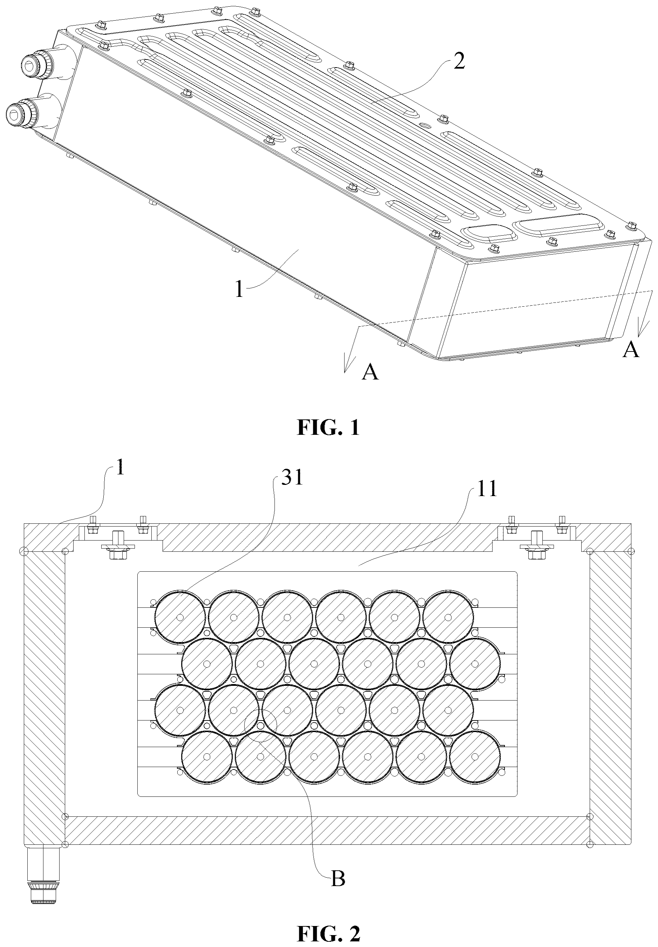

Referring to FIGS. 1, 2, and 4, the present application discloses a battery module. The battery module includes a casing 1, two liquid cooling assemblies 2, a cell group 3, and a CCS assembly 4. In some embodiments, the casing 1 has a liquid cooling chamber 11; the two liquid cooling assemblies 2 are disposed on two opposite sides of the liquid cooling chamber 11, respectively, and a liquid cooling assembly 2 has a cooling flow channel 21 communicating with the liquid cooling chamber 11. The cell group 3 has multiple cells 31 disposed in the liquid cooling chamber 11; and the CCS assembly 4 is disposed between the cell group 3 and any one of the two liquid cooling assemblies 2. In some embodiments, the liquid cooling chamber 11 communicates with the cooling flow channel 21 so that a coolant can flow between the liquid cooling chamber 11 and the cooling flow channel 21, and the coolant can take away heat generated by the cells 31 and the CCS assembly 4 in the flowing process, ensuring a relatively good cooling effect on the peripheries and ends of the cells 31 and the CCS assembly 4, uniformly and thoroughly cooling the cell group 3 and the CCS assembly 4, ensuring the temperature uniformity of the battery module, and thus ensuring the stable operation of the battery module.

In some embodiments, an end of the cell 31 is fixed to one liquid cooling assembly 2, and an end of the CCS assembly 4 is fixed to the other liquid cooling assembly 2, so that the cell group 3 and the CCS assembly 4 are both fixed in the liquid cooling chamber 11, and the coolant in the liquid cooling chamber 11 fully contacts the sides and the other end of the cell 31 and the other end and the sides of the CCS assembly 4, which are immersed in the coolant. Moreover, the coolant can flow between the liquid cooling chamber 11 and the cooling flow channel 21 so that the liquid cooling chamber 11 and the liquid cooling assembly 2 have the same cooling effect, and the end of the cell 31 and the end of the CCS assembly 4 that are connected to the liquid cooling assemblies 2 have the same cooling effect as portions immersed in the coolant. Thus, the cell group 3 and the CCS assembly 4 are uniformly and thoroughly cooled, ensuring the temperature uniformity of the battery module and the stable operation of the battery module.

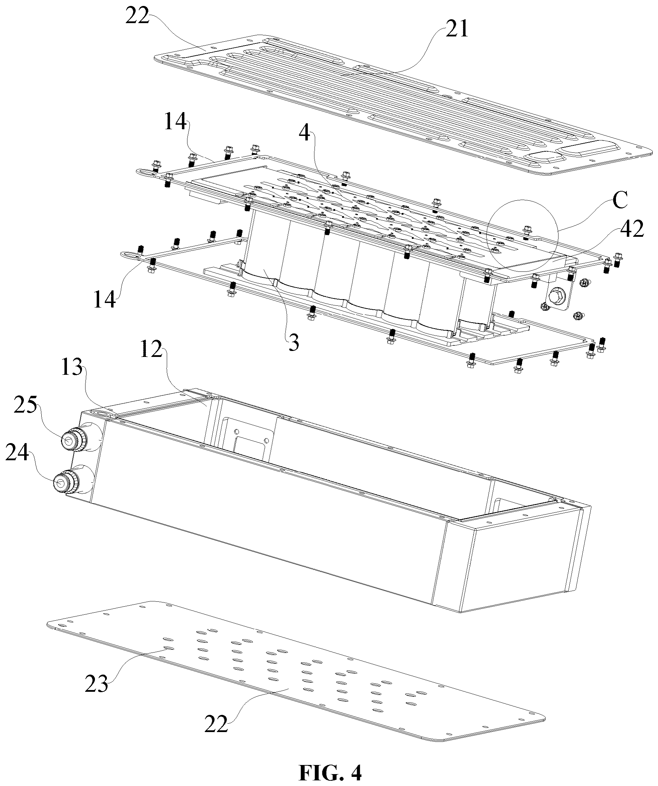

Referring to FIGS. 1 and 4, in some embodiments, the liquid cooling assembly 2 includes a liquid cooling plate 22, and the cooling flow channel 21 is disposed on the liquid cooling plate 22. In some embodiments, the liquid cooling plate 22 is connected to the casing 1 by means of bolts, snaps, welding, or the like, so that the two liquid cooling plates 22 are locked to the two opposite sides of the liquid cooling chamber 11.

The cooling flow channel 21 may be specifically formed in various manners. In some embodiments, the cooling flow channel 21 is formed inside the liquid cooling plate 22, that is, cavity structures may be formed inside the liquid cooling plate 22, and the cavity structures may be used as the cooling flow channel 21. In some embodiments, the liquid cooling plate 22 is formed by a combination of a sealing plate and a flow channel plate, the flow channel plate is provided with at least one groove recessed in a direction away from the sealing plate, the sealing plate is locked to the casing 1 by means of bolts, snaps, welding, or the like, and the flow channel plate is welded to a side of the sealing plate facing away from the liquid cooling chamber 11 so that the sealing plate and the flow channel plate form the liquid cooling plate 22 having the cooling flow channel 21. Alternatively, the cooling flow channel 21 may be formed in other manners. The specific manners of forming the cooling flow channel 21 are not listed one by one here.

In this embodiment, the liquid cooling chamber 11 communicates with the cooling flow channel 21 so that the coolant can flow between the liquid cooling chamber 11 and the cooling flow channel 21, and the coolant can take away heat from the cells 31 and the CCS assembly 4 in the flowing process, ensuring a relatively good cooling effect on the peripheries and ends of the cells 31 and the CCS assembly 4, uniformly and thoroughly cooling the cell group 3 and the CCS assembly 4, ensuring the temperature uniformity of the battery module, and thus ensuring the stable operation of the battery module.

Referring to FIGS. 2, 3, and 4, in some embodiments, multiple flow guide through holes 23 are distributed on the liquid cooling plate 22, and the multiple flow guide through holes 23 enable the cooling flow channel 21 to communicate with the liquid cooling chamber 11. Thus, the cooling flow channel 21 in the liquid cooling plate 22 communicates with the liquid cooling chamber 11 through the flow guide through holes 23 so that the coolant is driven to flow between the cooling flow channel 21 and the liquid cooling chamber 11 through the flow guide through holes 23.

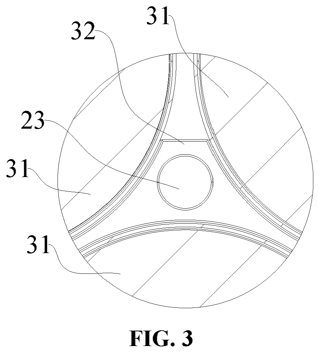

Referring to FIGS. 2 and 3, in some embodiments, a flow guide gap 32 is formed between adjacent cells 31, and the flow guide gap 32 is disposed opposite a flow guide through hole 23. Thus, the coolant in the cooling flow channel 21 can directly flow through the flow guide gap 32, and the flowing coolant can be less hindered by the cells 31 so that the coolant can smoothly flow between the liquid cooling chamber 11 and the cooling flow channel 21. In some embodiments, the flow guide gap 32 is surrounded by at least two adjacent cells 31. In some embodiments, the cells 31 are cylindrical, and the flow guide gap 32 is surrounded by three adjacent cells 31, that is, the flow guide gap 32 is disposed in a triangular region between three adjacent cells 31 with cylindrical structures, so as to fully utilize gaps between the cells 31 and optimize space utilization in the battery module. Thus, the coolant flowing along the flow guide gap 32 can fully contact surfaces of the cells 31 to quickly reduce the temperature of the cells 31.

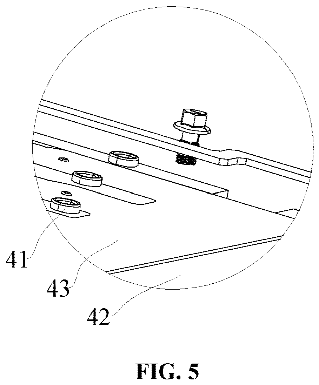

Referring to FIGS. 4 and 5, in some embodiments, the liquid cooling assembly 2 further includes a flow guide tube 41 penetrating through the CCS assembly 4, an end of the flow guide tube 41 communicates with the liquid cooling chamber 11, and the other end of the flow guide tube 41 extends into a flow guide through hole 23. Thus, the coolant in the liquid cooling chamber 11 can flow into the cooling flow channel 21 on the liquid cooling plate 22 through the flow guide tube 41. Moreover, since the flow guide tube 41 penetrates through the CCS assembly 4, the coolant flowing through the flow guide tube 41 can take away heat inside the CCS assembly 4, thereby cooling the inside of the CCS assembly 4 and fully optimizing the cooling effect on the CCS assembly 4.

In some embodiments, the inner diameter of the flow guide through hole 23 is greater than the outer diameter of the flow guide tube 41. The inner diameter of the flow guide through hole 23 is greater than the outer diameter of the flow guide tube 41 so that the flow guide tube 41 can extend into the flow guide through hole 23, eliminating a tolerance between the CCS assembly 4 and the liquid cooling plate 22 and facilitating the assembly of the flow guide tube 41 with the flow guide through hole 23. In some embodiments, the flow guide through hole 23 has a diameter of 13 mm, and the flow guide tube 41 has an outer diameter of 9 mm and an inner diameter of 6 mm. Moreover, it can be ensured that the flow guide through hole 23 on the other liquid cooling plate 22 is disposed opposite the flow guide tube 41 so that the coolant can smoothly flow between the two liquid cooling plates 22 through the flow guide tube 41.

Referring to FIGS. 4 and 5, in some embodiments, the CCS assembly 4 includes a plastic support 42 and an aluminum busbar 43, the aluminum busbar 43 is disposed between the plastic support 42 and the liquid cooling assembly 2, and the aluminum busbar 43 is bonded to the liquid cooling assembly 2. In some embodiments, adhesives such as structural adhesives or thermally conductive adhesives are provided on a surface of the aluminum busbar 43 so that the aluminum busbar 43 can be bonded to the liquid cooling plate 22. The aluminum busbar 43 can be bonded to the liquid cooling plate 22 so that the liquid cooling plate 22 can fully contact the aluminum busbar 43, thereby optimizing the cooling effect of the liquid cooling plate 22 on the aluminum busbar 43. In some embodiments, the liquid cooling plate 22 may be further provided with wire holes for leading out collection harnesses. Further, the flow guide tube 41 is an independent component, an end of the flow guide tube 41 is exposed to the liquid cooling chamber 11, and the other end of the flow guide tube 41 penetrates through the plastic support 42 and the aluminum busbar 43 and extends into the flow guide through hole 23. Alternatively, the flow guide tube 41 is integrally formed with the plastic support 42, an end of the flow guide tube 41 facing the cells 31 is exposed to the liquid cooling chamber 11, and the other end of the flow guide tube 41 penetrates through the aluminum busbar 43 and extends into the flow guide through hole 23. Thus, the coolant in the liquid cooling chamber 11, when flowing to the cooling flow channel 21 through the flow guide tube 41, can take away heat from the aluminum busbar 43, thereby optimizing the cooling effect on the aluminum busbar 43.

Referring to FIGS. 1 and 4, in some embodiments, the two liquid cooling assemblies 2 are disposed on the upper side and the lower side of the liquid cooling chamber 11 respectively, the CCS assembly 4 is disposed between the cell group 3 and the liquid cooling assembly 2 on the upper side, the liquid cooling assembly 2 on the upper side is connected to a coolant outlet 25, and the liquid cooling assembly 2 on the lower side is connected to a coolant inlet 24. Thus, the coolant flows in through the coolant inlet 24 and flows out through the coolant outlet 25. In some embodiments, the coolant inlet 24 communicates with the cooling flow channel 21 on the lower side, and the coolant outlet 25 communicates with the cooling flow channel 21 on the upper side. In this manner, the coolant enters the cooling flow channel 21 on the lower side and then enters the liquid cooling chamber 11 through the flow guide through holes 23 on the lower side. Only after the liquid cooling chamber 11 is filled with the coolant, can the coolant enter the cooling flow channel 21 on the upper side through the flow guide tube 41. Then, the coolant flows out from the cooling flow channel 21 on the upper side via the coolant outlet 25. That is, only after the cells 31 and the CCS assembly 4 are immersed in the coolant in the liquid cooling chamber 11, can the coolant enter the cooling flow channel 21 on the upper side, effectively ensuring the cooling effect on the cells 31 and the CCS assembly 4. Further, whether the coolant flows out through the coolant outlet 25 is determined, which can directly reflect whether the coolant has thoroughly cooled the cells 31 and the CCS assembly 4. Specifically, the flowing path of the coolant in the battery module is as follows: the coolant is input into the cooling flow channel 21 on the lower side through the coolant inlet 24 so that the coolant flows in the cooling flow channel 21 on the lower side to cool the bottom of the cells 31; meanwhile, the coolant in the cooling flow channel 21 enters and fills the liquid cooling chamber 11 through the flow guide through holes 23 so that the coolant in the liquid cooling chamber 11 cools the sides and the top of the cells 31 and the bottom and the sides of the CCS assembly 4 that are immersed therein; then, the coolant in the liquid cooling chamber 11 enters the cooling flow channel 21 on the upper side through the flow guide tubes 41 to cool the top of the CCS assembly 4 bonded to the liquid cooling plate 22 on the upper side; and the coolant flows out through the coolant outlet 25. It can be seen that the flowing path of the coolant in the battery module covers the bottom, sides, and top of the cells 31 and the bottom, sides, and top of the CCS assembly 4. Therefore, when the coolant flows out through the coolant outlet 25, it indicates that the coolant has flowed through the peripheries and ends of the cells 31 and the CCS assembly 4, which can directly reflect that the coolant has thoroughly cooled the cells 31 and the CCS assembly 4.

Referring to FIG. 4, in some embodiments, an opening 12 is provided on each of the two opposite sides of the casing 1, a sealing groove 13 is defined on the periphery of the opening 12, a sealing member 14 is assembled in the sealing groove 13, and the liquid cooling assembly 2 is hermetically connected to the sealing member 14. In some embodiments, the sealing member 14 is an adhesive, a sealing tape, a sealant, a sealing gasket, or the like. In some embodiments, the sealing member 14 is disposed in the sealing groove 13 to limit the sealing member 14, and the liquid cooling plate 22 is bonded to or abuts against the sealing member 14 so that the liquid cooling plate 22 is hermetically connected to the casing 1, preventing the leakage of the coolant in the liquid cooling chamber 11. Further, the liquid cooling plate 22 may be locked to the casing 1 by fasteners such as bolts, screws, or rivets so that the liquid cooling plates 22 and the casing 1 are secured and hermetically sealed to each other, forming a single integrated unit, and it is ensured that the liquid cooling plate 22 is tightly connected to the sealing member 14, improving the sealing effect.

In some embodiments, a battery pack including the preceding battery module is provided.

Referring to FIGS. 1, 2, 3, 4, and 5, in some embodiments, the bottoms of the cells 31 are fixed to the liquid cooling plate 22 on the lower side, and the top of the CCS assembly 4 is fixed to the liquid cooling plate 22 on the upper side, so that the cell group 3 and the CCS assembly 4 are both fixed in the liquid cooling chamber 11. The coolant is input into the cooling flow channel 21 on the lower side through the coolant inlet 24 so that the coolant flows in the cooling flow channel 21 on the lower side to cool the bottoms of the cells 31. Meanwhile, the coolant in the cooling flow channel 21 enters and fills the liquid cooling chamber 11 through the flow guide through holes 23 so that the coolant in the liquid cooling chamber 11 cools the sides and the tops of the cells 31 and the bottom and the sides of the CCS assembly 4 that are immersed therein. Then, the coolant in the liquid cooling chamber 11 enters the cooling flow channel 21 on the upper side through the flow guide tube 41 to cool the top of the CCS assembly 4 bonded to the liquid cooling plate 22 on the upper side. The coolant flows out through the coolant outlet 25. Thus, the coolant flows between the liquid cooling chamber 11 and two cooling flow channels 21, and the coolant takes away heat generated by the cells 31 and the CCS assembly 4 in the flowing process, ensuring a relatively good cooling effect on the peripheries and ends of the cells 31 and the CCS assembly 4, uniformly and thoroughly cooling the cell group 3 and the CCS assembly 4, ensuring the temperature uniformity of the battery module, and thus ensuring the stable operation of the battery module.

## Claims

1. A battery module, comprising:
a casing (1) having a liquid cooling chamber (11);
two liquid cooling assemblies (2) disposed on two opposite sides of the liquid cooling chamber (11), respectively, wherein a liquid cooling assembly (2) of the two liquid cooling assemblies (2) has a cooling flow channel (21) communicating with the liquid cooling chamber (11);
a cell group (3) having a plurality of cells (31) disposed in the liquid cooling chamber (11); and
a cells contact system, CCS, assembly (4) disposed between the cell group (3) and any one of the two liquid cooling assemblies (2).

2. The battery module according to claim 1, wherein the liquid cooling assembly (2) comprises a liquid cooling plate (22), and the cooling flow channel (21) is disposed on the liquid cooling plate (22).

3. The battery module according to claim 2, wherein the liquid cooling plate (22) is formed by a combination of a sealing plate and a flow channel plate, the flow channel plate is provided with at least one groove recessed in a direction away from the sealing plate, the sealing plate is locked to the casing (1), and the flow channel plate is welded to a side of the sealing plate facing away from the liquid cooling chamber (11).

4. The battery module according to claim 2 or 3, wherein a plurality of flow guide through holes (23) are distributed on the liquid cooling plate (22), and the plurality of flow guide through holes (23) enable the cooling flow channel (21) to communicate with the liquid cooling chamber (11).

5. The battery module according to claim 4, wherein a flow guide gap (32) is formed between adjacent cells (31) among the plurality of cells (31), and the flow guide gap (32) is disposed opposite one of the plurality of flow guide through holes (23).

6. The battery module according to claim 5, wherein the plurality of cells (31) are cylindrical, and the flow guide gap (32) is surrounded by three adjacent cells (31) among the plurality of cells (31).

7. The battery module according to claim 4, wherein the liquid cooling assembly (2) further comprises a flow guide tube (41) penetrating through the CCS assembly (4), an end of the flow guide tube (41) communicates with the liquid cooling chamber (11), and the other end of the flow guide tube (41) extends into one flow guide through hole (23) of the plurality of flow guide through holes (23).

8. The battery module according to claim 7, wherein an inner diameter of the one flow guide through hole (23) is greater than an outer diameter of the flow guide tube (41).

9. The battery module according to any one of claims 1 to 8, wherein the CCS assembly (4) comprises a plastic support (42) and an aluminum busbar (43), the aluminum busbar (43) is disposed between the plastic support (42) and the liquid cooling assembly (2), and the aluminum busbar (43) is bonded to the liquid cooling assembly (2).

10. The battery module according to claim 9, wherein a flow guide tube (41) on the liquid cooling assembly (2) is integrally formed with the plastic support (42).

11. The battery module according to any one of claims 1 to 10, wherein the two liquid cooling assemblies (2) are disposed on an upper side and a lower side of the liquid cooling chamber (11) respectively, the CCS assembly (4) is disposed between the cell group (3) and a liquid cooling assembly (2) on the upper side, the liquid cooling assembly (2) on the upper side is connected to a coolant outlet (25), and a liquid cooling assembly (2) on the lower side is connected to a coolant inlet (24).

12. The battery module according to any one of claims 1 to 11, wherein an opening (12) is provided on each of two opposite sides of the casing (1), a sealing groove (13) is defined on a periphery of the opening (12), a sealing member (14) is assembled in the sealing groove (13), and the liquid cooling assembly (2) is hermetically connected to the sealing member (14).

13. The battery module according to claim 12, wherein the sealing member (14) is an adhesive, a sealing tape, a sealant, or a sealing gasket.

14. A battery pack, comprising the battery module according to any one of claims 1 to 13.

15. The battery pack according to claim 14, wherein a bottom of each of the plurality of cells (31) is fixed to a liquid cooling plate (22) on a lower side of the liquid cooling chamber (11), and a top of the CCS assembly (4) is fixed to the liquid cooling plate (22) on an upper side of the liquid cooling chamber (11).
